# EUROPEAN PATENT SPECIFICATION

(11) **EP 3 450 601 B1**
(45) Date of publication and mention of the grant of the patent: **01.07.2020**
(21) Application number: 17306124.3
(22) Date of filing: 31.08.2017
(51) Int. Cl.: D04H 1/413, B60R 13/02, D04H 1/425, D04H 1/541, D04H 1/558

(54) **COMPOSITE MATERIAL COMPRISING DIATOMACEOUS EARTH**
VERBUNDWERKSTOFF MIT KIESELGUR
MATÉRIAU COMPOSITE COMPRENANT DE LA TERRE À DIATOMÉES

(43) Date of publication of application: 06.03.2019
(73) Proprietor: Faurecia Intérieur Industrie, 92000 Nanterre (FR)
(72) Inventor: SANCHEZ GARCIA, Dolores, 46004 VALENCIA (ES); RODILLA GUARDO, Jose Antonio, 46020 VALENCIA (ES)
(74) Representative: Lavoix

(56) References cited:
- CN-A- 103 894 015
- CN-A- 104 264 366
- CN-A- 106 088 495
- GB-A- 2 370 224
- JP-A- 2002 154 178
- JP-A- 2010 031 136
- US-A- 5 886 306
- US-A1- 2017 058 451

## Description

The present invention concerns a method for preparing a composite material, vehicle parts, such as automotive interior trim parts, comprising a composite material and the manufacture thereof.

Natural fibers based composite materials are known in the art. However, natural fibers may induce volatile organic compound (VOC) emission and odor emission which are detrimental for their use as materials useful for vehicle parts. Among the volatile organic compound (VOC) to be avoided are formaldehyde and acetaldehyde.

Application KR 10-1062899 describes a thermoplastic resin composition used for automotive materials comprising:
- 30-65%wt of a thermoplastic resin,
- 20-65%wt of natural fibers,
- 1,0-10%wt of bamboo charcoal powder, chips elvan, activated charcoal or zeolite. Said composition is described as reducing the concentration of volatile organic compound and of formaldehyde.

Application GB 2 370 224 discloses a method of protecting natural and other fibres from insect attack by adding a substance, such as diatomite earth, which insects find objectionable, at an appropriate point in a fibre cleaning, pre-treatment or manufacturing process.

Application CN 103 894 015 discloses a composite material for filtering gases or liquids and prepared from wood pulp (5-15%), wood fibers (10-20%), polypropylene fibers (37-57%) and diatomaceous earth (8-28%).

Another issue when natural fibers, especially wood fibers, are used as component of a composite material is fungus growth, causing not only bad odor, but which may also lead to deterioration of the vehicle part comprising the composite material and/or to its function in the vehicle.

One of the aims of the present invention is to provide a vehicle comprising a natural fibers based composite material which allows preventing fungus growth, while reducing the concentration of volatile organic compound and odor emission.
hereafter is described a composite material comprising:
- from 30 to 95% by weight of natural fibers, and
- from 0.1 to 10% by weight of diatomaceous earth.

In the present application, « composite material » is meant to cover heterogeneous materials associating several types of materials which do not mix. The different materials/phases of a composite material may be detected with Electronical Scanning Microscopy (SEM).

The invention is based on the discovery that incorporating diatomaceous earth to a natural fibers based composite material allows not only reducing emissions of odor and of organic volatile compounds, but also preventing fungus growth.

For example, the emission of odor can be measured by Volvo VCS 1027,2729 Variant C method or VW. Test PV 3900 Variant C3 method. The indoor total organic volatile compounds (TVOC) can be measured by VCS 1027,2749/1 method, VCS 1027,2759 method, Fogging VCS 1027,2719 method G (fogging behavior). Formaldehyde emissions can be measured by Formaldehyde BMW AA-0061 method or by Formaldehyde VCS 1027,2739 method. Acetaldehyde emissions can be measured by Acetaldehyde BMW AA-0061 method.

Diatomaceous earth (also called diatomite) is a naturally occurring, soft, siliceous sedimentary rock that is easily crumbled into a fine white to off-white powder. Generally, its particle size obtained from a laser particle size analyzer ranges from less than 3 µm to more than 1 mm, typically 5 to 500 µm, such as from 5 to 100 µm, preferably from 5 to 20 µm. These sizes are particularly well suited to obtain a good dispersion of the diatomaceous earth within the composite material.

Typically, diatomaceous earth comprises 75 to 90% silica, 1 to 4% alumina and 0.1 to 2% iron oxide. It may comprise other oxides, such as calcium oxide (such as from 0 to 15%wt, preferably from 5 to 10%wt), magnesium oxide (such as from 0,01 to 1%), sodium oxide (such as from 0,01 to 1%) and/or potassium oxide (such as from 0,01 to 1%).

The diatomaceous earth is advantageously well dispersed in the composite material. This allows obtaining uniform properties for all parts of the composite material.

Preferably, the composite material comprises from 1 to 7 % by weight, more preferably from 1 to 5% by weight, for example from 3 to 5% by weight of diatomaceous earth. These proportions are particularly suited to obtain a good dispersion of the diatomaceous earth within the composite material. Above 5% by weight of diatomaceous earth, the diatomaceous earth particles may tend to agglomerate and may disperse less reliably.

The composite material comprises from 30 to 95%wt of natural fibers.

The natural fibers are preferably:
- fibers of plant origin, notably selected from the group formed by cotton, flax, hemp, Manila hemp or abaca, banana tree, coconut, jute, ramie, raffia, sisal, broom, bamboo, miscanthus, kenaf, coprah, agave, sorghum, switch-grass and wood, and/or
- fibers of animal origin, notably selected from the group formed by wool, alpaca fleece, mohair, cashmere, angora and silk.

The natural fibers are preferably chosen from wood, hemp, flax and/or kenaf fibers.

In one embodiment, the natural fibers comprise (or consist of) wood fibers. The composite material preferably comprises from 50 to 95%wt of wood fibers, most preferably from 65 to 90%wt of wood fibers, for example from 70 to 85%wt of wood fibers.

In another embodiment, the natural fibers differ from wood fibers and are preferably chosen from hemp, flax and/or kenaf fibers. The composite material preferably comprises from 40 to 60% by weight of natural fibers chosen from flax fibers, hemp fibers, kenaf fibers and a mixture thereof.

The length of the natural fibers may greatly vary depending on the contemplated applications for the composite material. For the manufacturing of automotive interior trim parts, fibers with an average length comprised between 0.1 and 100 mm, in particular from 60 to 100 mm, are preferably used.

In one embodiment, the composite material comprises a resin, preferably from 5 to 25% by weight of resin. Preferably, when the composite material comprises a resin, the natural fibers comprise or consist of wood fibers. Generally, the resin of the composite material is a synthetic resin. Said synthetic resin can be prepared by polymerizing bio-sourced monomers. The resin of the composite material is typically a thermoset resin, such as a phenolic resin, an acrylic resin and a mixture thereof. This resin acts as a binder.

The composite material may further comprise polyester fibers, for example from 0 to 24.9%wt, preferably from 15 to 24.9%wt of polyester fibers. Preferably, when the composite material comprises polyester fibers, it comprises wood fibers. Polyester fibers with an average length comprised between 0.1 and 100 mm, in particular from 40 to 80 mm as measured by ISO 6989 standard (1981, confirmed in 2015), are preferably used. By "polyester fibers" is meant fibers comprising or consisting of polyester. The polyester fibers can be bicomponent polyester fibers (PET-BIKO fibers). The composite material may comprise a mixture of fibers consisting of polyester and of bicomponent polyester fibers. The composite material may also be free from polyester fibers.

The composite material may further comprise polypropylene fibers, for example from 30 to 59.9%wt, such as from 45 to 55%wt of polypropylene fibers. Preferably, when the composite material comprises polypropylene fibers, it comprises natural fibers different from wood fibers, and which are for example chosen from hemp, flax and/or kenaf fibers. The polypropylene fibers act as a binder when the polypropylene is melted. Thus, the polypropylene fibers help maintaining the cohesion of the composite material. In one embodiment, the composite material comprises polypropylene fibers and comprises less than 5% by weight of resin, preferably less than 2% of resin. In a preferred embodiment, the composite material comprises polypropylene fibers and is free from phenolic resin and acrylic resin, or even free from resin. The composite material may also be free from polypropylene fibers.

The composite material may further comprise additives usually used in composite materials used for the manufacture of vehicle parts, such as:
- a wax, such as a paraffin,
- an structural-purpose Polyester Fibers non-woven fleece
- an anti-hydrolysis additive (for example carbodiimides, epoxides), and/or
- an antifungal agent, and/or
- anti-oxidants (phosphoric, phenolic...), and/or
- an anti-UV agent (phenolic hindered amines ...), and/or
- a coloring agent or a pigment, and/or
- a flame-retardant, and/or
- a compatibilizing agent (maleic anhydride, silanes...).

In an embodiment, the composite material consists essentially of:
- from 40 to 60% by weight of natural fibers chosen from flax fibers, hemp fibers, kenaf fibers and a mixture thereof,
- from 0.1 to 10% by weight of diatomaceous earth,
- from 30 to 59.9% by weight of polypropylene fibers, and
- from 0 to 1 % by weight of wax, preferably paraffin.

In another embodiment, the composite material consists essentially of:
- from 65 to 90% by weight of wood fibers,
- from 5 to 25% by weight of resin, preferably chosen from a phenolic resin, an acrylic resin and a mixture thereof.
- from 0.1 to 10% by weight of diatomaceous earth,
- from 0 to 24.9% by weight of polyester fibers, and
- from 0 to 1% by weight of wax, preferably paraffin.

Preferably, the composite material is in the form of a mat, the thickness of which is typically from 0.5 to 1.5 cm.

The composite material exhibits the following advantageous properties:
- it allows reducing emissions of odor compared to a material free from diatomite,
- it allows reducing emissions of organic volatile compounds compared to a material free from diatomite,
- it allows reducing fungus growth,
- generally, its mechanical properties, such as flexural properties and/or tensile strength, are improved compared to a material free from diatomite.
- it is made mostly of green and renewable materials (i.e. natural fibers), and
- it is made of inexpensive materials.

According to a first object, the invention is directed to a method for preparing the composite material described above comprising the steps of:
(i) dispersing diatomaceous earth in water,
(ii) applying the obtained dispersion on natural fibers,
(iii) mixing the natural fibers with the other components of the composite material, then
(iv) forming the composite material, preferably in the form of a mat.

By "other components of the composite material" is meant the components of the composite material other than the natural fibers and the diatomaceous earth, typically those described above, such as a resin, polyester fibers, polypropylene fibers, a wax...

Generally, steps (i) and (iii) are carried out at room temperature (about 20°C).

Preferably, in step (i), from 10% to 30% by weight of diatomaceous earth is dispersed in water, typically around 20% by weight.

Step (ii) is generally carried out by spraying the dispersion on natural fibers.

In the method, steps (ii) and (iii) are generally either subsequent ((i.e. step (ii) then step (iii))) or simultaneous.

In one embodiment, the natural fibers are wood fibers and the other components comprise (or are) a resin and optionally polyester fibers. Mixing the wood fibers with the resin before applying the diatomaceous dispersion on just the natural fibers (i.e. performing step (iii) before step (ii)) generally leads to a bad dispersion of the diatomaceous earth within the composite material. Accordingly, it is better not to carry out step (iii) before step (ii).

Moreover, in this embodiment, the method can comprise a drying step, preferably until obtaining a water content lower than 5% wt. Accordingly, in this embodiment, the method preferably comprises the steps of:
(i) dispersing diatomaceous earth in water,
(ii1) applying the obtained dispersion on wood fibers when mixing with the resin to obtain a mixture comprising water, diatomaceous earth, wood fibers and a resin,
(ii2) drying the obtained mixture, preferably until obtaining a water content lower than 5% wt, and
(iii) optionally mixing the obtained mixture with polyester fibers, then
(iv) forming the composite material, preferably in the form of a mat.

The polyester fibers used in optional step (iii) can be previously mixed with additives.

Typically, the wood fibers used in the method come from cut-offs from Forestry /Timber / (Furniture or Building) industry. Even frequently the wood fibers are supplied by the sawmills. Alternatively, the wood fibers can come from wood chips, and the method can comprise, before step (i), a step of manufacturing wood fibers from wood chips.

In another embodiment, the natural fibers are chosen from flax fibers, hemp fibers, kenaf fibers and a mixture thereof, and the other components comprise (or are) polypropylene fibers.

Thus, in this embodiment, the method typically comprises the steps of:
(i) dispersing diatomaceous earth in water,
(ii) applying the obtained dispersion on natural fibers chosen from flax fibers, hemp fibers, kenaf fibers and a mixture thereof,
(iii) mixing the natural fibers with polypropylene fibers, then
(iv) forming the composite material, preferably in the form of a mat.

Step (iii) is preferably performed after step (ii).

The method can comprise other steps. For example, the method generally comprises, after step (iv), a step (v) of molding the composite material into a shaped component by compression. Final press-molded products usually have a thickness from 1.0 to 3.0 mm, preferably from 1.5 to 2.5 mm.

According to a second object, the invention relates to the use of diatomaceous earth to prevent fungus growth of a composite material comprising natural fibers, and preferably to prevent fungus growth and to reduce the concentration of volatile organic compound and odor emission. The invention also concerns a method for preventing fungus growth of a composite material comprising natural fibers comprising the steps of:
(i) dispersing diatomaceous earth in water,
(ii) applying the obtained dispersion on natural fibers,
(iii) mixing the natural fibers with the other components of the composite material, then
(iv) forming the composite material, preferably in the form of a mat.

The embodiments disclosed above as regards the components of the composite material, the proportions thereof and as regards the method also apply.

According to a third object, the invention relates to a method for manufacturing vehicle parts, such as automotive interior trim parts, by use of the composite material described above. Generally, this method comprises the steps of:
a) forming the composite material described above into the shape desired for the vehicle part,
b) optionally covering the composite material with a decorative layer.

Step a) is generally carried out by compression. The formed composite material usually has a thickness from 1.0 to 3.0 mm, preferably from 1.5 to 2.5 mm.

Steps a) and b) can be carried out in any order.

For example, the decorative layer of step b) is a decorative film (such as pigmentation paper film), foil (such as vinyl foil), textile fabric (such as carpet, dilour or non-woven) or leather.

In one embodiment, the composite material comprises wood fibers as natural fibers, a resin and optionally polyester fibers.

Generally, in this embodiment, step a) of forming the composite material is carried out by hot compression, typically with a pressure from 15 to 20 kg/cm² and a temperature from 200 to 260°C, for example during several pressure stages between 5 to 10 seconds each and up to a total of maximal 60 seconds.

In this embodiment, for manufacturing vehicle parts having complex shapes and/or when the composite material is free from polyester fibers, the method for manufacturing vehicle parts may comprise before step a), a step a₀) of steaming the composite material, followed by a step a₁) of preforming the composite material.

In this embodiment, when present, step b) of covering the composite material with a decorative layer is generally performed after step a). The formed composite material obtained at the end of step a) can be stored before carrying out step b). Typically, step b) is carried out by applying glue on the surface of the formed composite material obtained at the end of step a) (either by spraying or by roller coating system), and then edge wrapping with the decorative layer.

In another embodiment, the composite material comprises natural fibers are chosen from flax fibers, hemp fibers, kenaf fibers and polypropylene fibers. Preferably, in this embodiment, step a) of forming the composite material is carried out by compression, preferably at a temperature from 18 to 30°C, for example during 20 to 30 seconds. This step of compression can be preceded by a step of hot calibration, preferably at a temperature from 180 to 230°C, for example during several pressure stages between 5 to 30 seconds each and up to a total of around 60 seconds..

In this embodiment, step b) of covering the composite material with a decorative layer can be carried out at any stage. The method generally comprises the step of hot calibration, then the step of lamination of the composite material with a decorative layer, then the step of forming the composite material into the shape desired for the vehicle part by compression (1-shot compression).

According to a fourth object, the invention relates to vehicle parts, such as automotive interior trim parts, for example decorative panels or door panels, comprising the composite material described above or vehicle parts obtainable by the manufacturing method described above.

The vehicle interior trim part is almost always covered, either in 1-shot or in 2-shots or several steps depending on design complexity and decorative layer choice. Uncovered samples may be used just for testing. Advantageously, covering the vehicle trim part generally reduces the odor emission and VOC emission as a consequence of barrier effect, depending on the nature of the decorative layer.

The invention will be explained in more detail by means of the following examples, purely given as an illustration.

In the examples below, composite materials in the form of mats comprising either 4%wt of diatomaceous earth or 4% of zeolite (comparative examples) were prepared following the above described procedures.

Diatomaceous earth (Primisil A6 from Imerys, CAS number 61790-53-2) having a particle size of about 12.9 µm and a composition as specified in table 1 was used.

**Table 1: Composition of the used diatomaceous earth**

| | |
|---|---|
| Loss on ignition | 12.0 |
| SiO₂ | 78 |
| Al₂O₃ | 1.1 |
| Fe₂O₃ | 0.5 |
| CaO | 8.0 |
| MgO | 0.1 |
| Na₂O | 0.2 |
| K₂O | 0.1 |

For comparison, zeolite (Zeolite Natural Micro m425 from Zeocat, CAS number 12173-10-3) having a particle size of about 425 µm was used.

Composite materials in the form of a mat comprising 48% by weight of natural fibers (NF) (kenaf fibers from Wilhelm G. Clasen e.K. and having a length of 60 ± 10 mm), 48% by weight of polypropylene fibers (PP) having a length of 60 ± 10 mm and either 4% by weight of diatomite or 4% by weight of zeolite were prepared. The composite materials were either uncovered, or covered with leather. For control, composite materials comprising 50% by weight of natural fibers (NF) (kenaf fibers from Wilhelm G. Clasen e.K. and having a length of 60 ± 10 mm), 50% by weight of polypropylene fibers (PP) and free from diatomite and from zeolite, either covered or uncovered, were also prepared. Their emissions of odor and of VOC were tested. Table 2 provides the results of these tests.

Composite materials in the form of a mat comprising 70.2% by weight of wood fibers (WF) and 16% by weight of Polyester fibers and 8.5% by weight of a phenolic resin, 1% by weight of paraffin, and either 4% by weight of diatomite or 4% by weight of zeolite were prepared. The composite materials were either uncovered, or covered with leather. For control, composite materials comprising 72.2% by weight of wood fibers (WF) and 18% by weight of polyester fibers and 8.5% by weight of resin, 1% by weight of paraffin and free from diatomite and from zeolite, either covered or uncovered, were also prepared. Their mechanical properties, emissions of odor and of VOC were tested. Table 3 provides the results of these tests.

In both tables 2 and 3, "comparative" is the composite material free from diatomite and from zeolite, and "Note" is the assessment made on the odor perception by the persons eligible for performing the assessment and their rating is expressed as follows:
Note 1: Not perceptible odor
Note 2: Perceptible but not offensive
Note 3: Clearly perceptible but not yet offensive
Note 4: Offensive
Note 5: Strongly offensive
Note 6: Unbearable

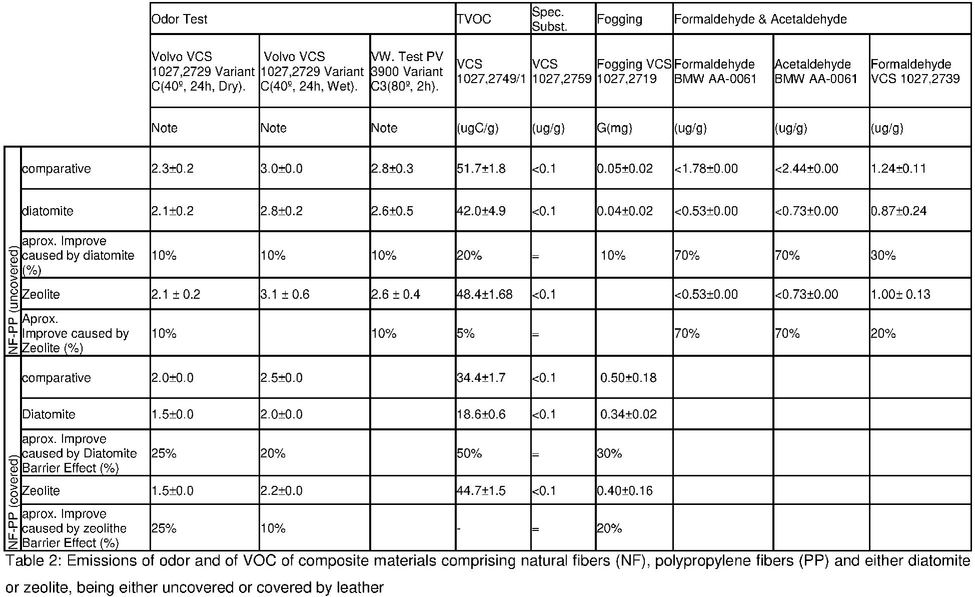

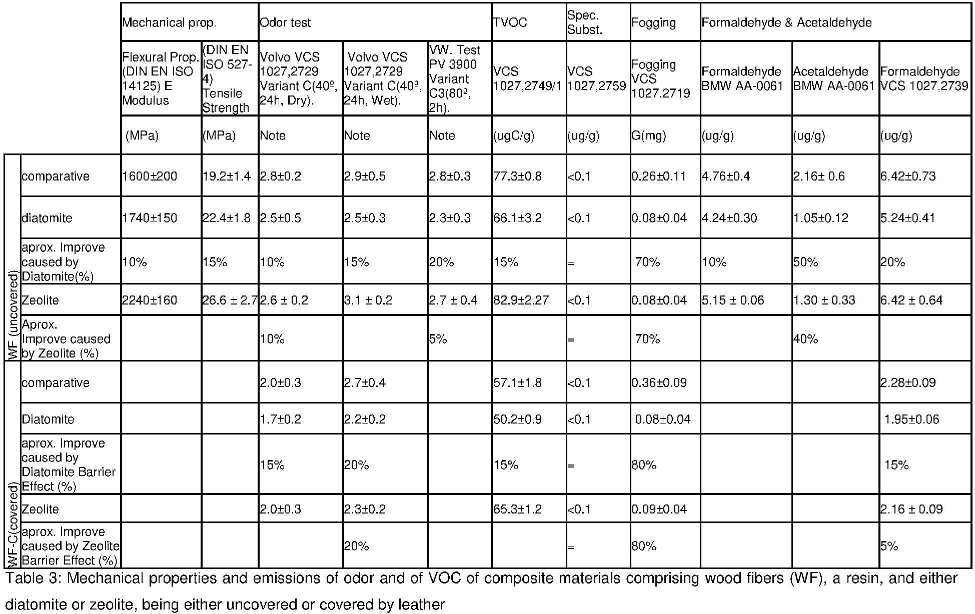

The results demonstrate that:
- introducing diatomaceous earth allows reducing emissions of odor and of organic volatile compounds, and improving the mechanical properties,
- covering the composite material allows reducing emissions of odor and of organic volatile compounds further (Barrier Effect, that depends on the nature of the decorative layer)

All the prepared composite materials were placed 1000 hours at 38°C and at 95% relative humidity (RH). High fungus growth was observed visually for the untreated composite material free from diatomite (control composite material or control sample). On the contrary, very low fungus growth was observed for the composite material comprising 4% by weight of diatomite.

For comparison, (wood fibers based or natural fiber based) composite materials comprising zeolite instead of diatomite were tested. No prevention of fungus growth was observed for these comparative composite materials.

## Claims

1. Method for preparing a composite material comprising from 30 to 95%wt of natural fibers and from 0.1 to 10%wt of diatomaceous earth, the method comprising the steps of:
(i) dispersing diatomaceous earth in water,
(ii) applying the obtained dispersion on natural fibers,
(iii) mixing the natural fibers with the other components of the composite material, then
(iv) forming the composite material, preferably in the form of a mat.

2. Method according to claim 1 for preparing a composite material comprising from 30 to 95%wt of wood fibers, from 0.1 to 10%wt of diatomaceous earth, a resin and optionally polyester fibers, the method comprising the steps of:
(i) dispersing diatomaceous earth in water,
(ii1) applying the obtained dispersion on wood fibers when mixing with the resin to obtain a mixture comprising water, diatomaceous earth, wood fibers, and a resin,
(ii2) drying the obtained mixture, preferably until obtaining a water content lower than 5% wt,
(iii) optionally mixing the obtained mixture with polyester fibers, then
(iv) forming the composite material, preferably in the form of a mat.

3. Method according to claim 1 for preparing a composite material comprising from 30 to 95%wt of natural fibers chosen from hemp fibers, flax fibers, kenaf fibers and a mixture thereof, from 0.1 to 10%wt of diatomaceous earth and polypropylene fibers, the method comprising the steps of:
(i) dispersing diatomaceous earth in water,
(ii) applying the obtained dispersion on natural fibers chosen from flax fibers, hemp fibers, kenaf fibers and a mixture thereof, then
(iii) mixing the natural fibers with polypropylene fibers, then
(iv) forming the composite material, preferably in the form of a mat.

4. Vehicle part comprising a composite material comprising from 30 to 95%wt of natural fibers and from 0.1 to 10%wt of diatomaceous earth.

5. Vehicle part according to claim 4, the composite material of which comprises from 1 to 5% by weight of diatomaceous earth.

6. Vehicle part according to claim 4 or 5, wherein the natural fibers of the composite material are wood fibers.

7. Vehicle part according to claim 6, the composite material of which comprises from 65 to 90% by weight of wood fibers.

8. Vehicle part according to claim 6 or 7, the composite material of which comprises a resin, preferably from 5 to 25% by weight.

9. Vehicle part according to anyone of claims 6 to 8, the composite material of which comprises polyester fibers, preferably from 0 to 24.9% by weight.

10. Vehicle part according to claim 4 or 5, wherein the natural fibers of the composite material are chosen from hemp fibers, flax fibers, kenaf fibers and a mixture thereof.

11. Vehicle part according to claim 10, the composite material of which comprises from 40 to 60% by weight of natural fibers.

12. Vehicle part according to claim 10 or 11, the composite material of which comprises polypropylene fibers, preferably from 30 to 59.9% by weight.

13. Vehicle part according to any one of claims 4 to 12, which is an automotive interior trim part.

14. Method for manufacturing a vehicle part according to any one of claims 4 to 13, comprising the steps of:
a) forming the composite material as defined in anyone of claims 4 to 13 into the shape desired for the vehicle part,
b) optionally covering the composite material with a decorative layer.

15. Use of diatomaceous earth to prevent fungus growth of a vehicle part comprising a composite material comprising natural fibers, preferably to prevent fungus growth and to reduce the concentration of volatile organic compound and odor emission of a vehicle part comprising a composite material comprising natural fibers.

## Patentansprüche

1. Verfahren zum Herstellen eines von 30 bis 95 Gew.-% Naturfasern und von 0,1 bis 10 Gew.-% Kieselgur enthaltenden Verbundwerkstoffs, wobei das Verfahren die Schritte umfasst:
(i) Dispergieren von Kieselgur in Wasser,
(ii) Auftragen der erhaltenen Dispersion auf Naturfasern,
(iii) Mischen der Naturfasern mit den anderen Bestandteilen des Verbundwerkstoffs, dann
(iv) Formen des Verbundwerkstoffs, vorzugsweise in Form einer Matte.

2. Verfahren nach Anspruch 1 zum Herstellen eines von 30 bis 95 Gew.-% Holzfasern, von 0,1 bis 10 Gew.-% Kieselgur, ein Harz, und optional Polyesterfasern enthaltenden Verbundwerkstoffs, wobei das Verfahren die Schritte umfasst:
(i) Dispergieren von Kieselgur in Wasser,
(ii1) Auftragen der erhaltenen Dispersion auf Holzfasern beim Mischen mit dem Harz, um eine Wasser, Kieselgur, Holzfasern und ein Harz enthaltende Mischung zu erhalten,
(ii2) Trocknen der erhaltenen Mischung, vorzugsweise bis zum Erreichen eines Wassergehalts von unter 5 Gew.-%,
(iii) optional Mischen der erhaltenen Mischung mit Polyesterfasern, dann
(iv) Formen des Verbundwerkstoffs, vorzugsweise in Form einer Matte.

3. Verfahren nach Anspruch 1 zum Herstellen eines Verbundwerkstoffs enthaltend von 30 bis 95 Gew.-% Naturfasern, ausgewählt aus Hanffasern, Flachsfasern, Kenaffasern und einer Mischung davon, von 0,1 bis 10 Gew.-% Kieselgur und Polypropylenfasern, wobei das Verfahren die Schritte umfasst:
(i) Dispergieren von Kieselgur in Wasser,
(ii) Auftragen der erhaltenen Dispersion auf Naturfasern, ausgewählt aus Flachsfasern, Hanffasern, Kenaffasern und einer Mischung davon, dann
(iii) Mischen der natürlichen Fasern mit Polypropylenfasern, dann
(iv) Formen des Verbundwerkstoffs, vorzugsweise in Form einer Matte.

4. Fahrzeugteil aufweisend einen 30 bis 95 Gew.-% Naturfasern und von 0,1 bis 10 Gew.-% Kieselgur enthaltenden Verbundwerkstoff.

5. Fahrzeugteil nach Anspruch 4, dessen Verbundwerkstoff von 1 bis 5 Gew.-% Kieselgur enthält.

6. Fahrzeugteil nach Anspruch 4 oder 5, wobei die Naturfasern des Verbundwerkstoffs Holzfasern sind.

7. Fahrzeugteil nach Anspruch 6, dessen Verbundwerkstoff von 65 bis 90 Gew.-% Holzfasern enthält.

8. Fahrzeugteil nach Anspruch 6 oder 7, dessen Verbundwerkstoff ein Harz, vorzugsweise von 5 bis 25 Gew.-%, enthält.

9. Fahrzeugteil nach einem der Ansprüche 6 bis 8, dessen Verbundwerkstoff Polyesterfasern, vorzugsweise von 0 bis 24,9 Gew.-%, enthält.

10. Fahrzeugteil nach Anspruch 4 oder 5, wobei die Naturfasern des Verbundwerkstoffs ausgewählt sind aus Hanffasern, Flachsfasern, Kenaffasern, und einer Mischung davon.

11. Fahrzeugteil nach Anspruch 10, dessen Verbundwerkstoff von 40 bis 60 Gew.-% Naturfasern enthält.

12. Fahrzeugteil nach Anspruch 10 oder 11, dessen Verbundwerkstoff Polypropylenfasern, vorzugsweise von 30 bis 59,9 Gew.-%, enthält.

13. Fahrzeugteil nach einem der Ansprüche 4 bis 12, das ein Kraftfahrzeug-Innenverkleidungsteil ist.

14. Verfahren zum Herstellen eines Fahrzeugteils nach einem der Ansprüche 4 bis 13, umfassend die Schritte:
a) Formen des Verbundwerkstoffs gemäß einem der Ansprüche 4 bis 13 in die für das Fahrzeugteil gewünschte Form,
b) optional Bedecken des Verbundwerkstoffs mit einer Dekorschicht.

15. Verwendung von Kieselgur zum Verhindern von Schimmelwachstum bei einem Fahrzeugteil, das einen Naturfasern enthaltenden Verbundwerkstoff aufweist, vorzugsweise zum Verhindern von Schimmelwachstum und zum Reduzieren der Konzentration einer flüchtigen organischen Verbindung und Geruchsemission eines Fahrzeugteils, das einen Naturfasern enthaltenden Verbundwerkstoff aufweist.

## Revendications

1. Procédé de préparation d'un matériau composite comprenant de 30 à 95 % en poids de fibres naturelles et de 0,1 à 10 % en poids de terre de diatomées, le procédé comprenant les étapes suivantes :
(i) dispersion de terre de diatomées dans de l'eau,
(ii) application de la dispersion obtenue sur des fibres naturelles,
(iii) mélange des fibres naturelles avec les autres composants du matériau composite, puis
(iv) formation du matériau composite, de préférence sous la forme d'un mat.

2. Procédé selon la revendication 1 pour la préparation d'un matériau composite comprenant de 30 à 95 % en poids de fibres de bois, de 0,1 à 10 % en poids de terre de diatomées, une résine et éventuellement des fibres de polyester, le procédé comprenant les étapes suivantes :
(i) dispersion de terre de diatomées dans de l'eau,
(ii1) application de la dispersion obtenue sur des fibres de bois lors du mélange avec la résine pour que soit obtenu un mélange comprenant de l'eau, de la terre de diatomées, des fibres de bois, et une résine,
(ii2) séchage du mélange obtenu, de préférence jusqu'à obtention d'une teneur en eau inférieure à 5 % en poids,
(iii) éventuellement mélange du mélange obtenu avec des fibres de polyester,
(iv) formation du matériau composite, de préférence sous la forme d'un mat.

3. Procédé selon la revendication 1 pour la préparation d'un matériau composite comprenant de 30 à 95 % en poids de fibres naturelles choisies parmi les fibres de chanvre, les fibres de lin, les fibres de kénaf et leurs mélanges, de 0,1 à 10 % en poids de terre de diatomées et des fibres de polypropylène, le procédé comprenant les étapes suivantes :
(i) dispersion de terre de diatomées dans de l'eau,
(ii) application de la dispersion obtenue sur des fibres naturelles choisies parmi les fibres de chanvre, les fibres de lin, les fibres de kénaf et leurs mélanges, puis
(iii) mélange des fibres naturelles avec des fibres de polypropylène, puis
(iv) formation du matériau composite, de préférence sous la forme d'un mat.

4. Pièce de véhicule comprenant un matériau composite comprenant de 30 à 95 % en poids de fibres naturelles et de 0,1 à 10 % en poids de terre de diatomées.

5. Pièce de véhicule selon la revendication 4, dont le matériau composite comprend de 1 à 5 % en poids de terre de diatomées.

6. Pièce de véhicule selon la revendication 4 ou 5, dans laquelle les fibres naturelles du matériau composite sont des fibres de bois.

7. Pièce de véhicule selon la revendication 6, dont le matériau composite comprend de 65 à 90 % en poids de fibres de bois.

8. Pièce de véhicule selon la revendication 6 ou 7, dont le matériau composite comprend une résine, de préférence à raison de 5 à 25 % en poids.

9. Pièce de véhicule selon l'une quelconque des revendications 6 à 8, dont le matériau composite comprend des fibres de polyester, de préférence à raison de 0 à 24,9 % en poids.

10. Pièce de véhicule selon la revendication 4 ou 5, dans laquelle les fibres naturelles du matériau composite sont choisies parmi les fibres de chanvre, les fibres de lin, les fibres de kénaf et leurs mélanges.

11. Pièce de véhicule selon la revendication 10, dont le matériau composite comprend de 40 à 60 % en poids de fibres naturelles.

12. Pièce de véhicule selon la revendication 10 ou 11, dont le matériau composite comprend des fibres de polypropylène, de préférence à raison de 30 à 59,9 % en poids.

13. Pièce de véhicule selon l'une quelconque des revendications 4 à 12, qui est une pièce de garniture intérieure d'automobile.

14. Procédé de fabrication d'une pièce de véhicule de l'une quelconque des revendications 4 à 13, comprenant les étapes suivantes :
a) mise du matériau composite tel que défini dans l'une quelconque des revendications 4 à 13 sous la forme souhaitée pour la pièce de véhicule,
b) éventuellement recouvrement du matériau composite avec une couche décorative.

15. Utilisation de terre de diatomées pour empêcher la croissance de champignons dans une pièce de véhicule comprenant un matériau composite comprenant des fibres naturelles, de préférence pour empêcher la croissance de champignons et pour réduire la concentration de composés organiques volatils et l'émission d'odeurs par une pièce de véhicule comprenant un matériau composite comprenant des fibres naturelles.
